# EUROPÄISCHE PATENTSCHRIFT

(11) **EP 2 833 337 B1**
(45) Veröffentlichungstag und Bekanntmachung des Hinweises auf die Patenterteilung: **14.06.2017**
(21) Anmeldenummer: 14175665.0
(22) Anmeldetag: 03.07.2014
(51) Int. Cl.: G08G 5/00, G06Q 10/08, G06Q 10/06

(54) **Verfahren zur Bereitstellung von Verkehrsinformationen**
Method for providing traffic information
Procédé de mise à disposition d'informations de trafic

(30) Priorität: 30.07.2013 AT 504772013
(43) Veröffentlichungstag der Anmeldung: 04.02.2015
(73) Patentinhaber: Frequentis AG, 1100 Wien (AT)
(72) Erfinder: Savulov, Alexandru, 1070 Wien (AT)
(74) Vertreter: Wildhack & Jellinek

(56) Entgegenhaltungen:
- WO-A1-2007/048237
- DE-A1-102012 200 192
- GB-A- 2 496 884
- US-A- 5 999 946
- US-A1- 2005 080 794
- US-A1- 2007 118 564
- US-A1- 2013 080 042

## Beschreibung

Die Erfindung betrifft ein Verfahren sowie ein Computersystem zur Bereitstellung von ortsgebundenen Verkehrsinformationen, insbesondere Luftverkehrs- oder Seeverkehrsinformationen.

Aus dem Stand der Technik sind unterschiedliche Nachrichtenverbreitungssysteme zur Bereitstellung von ortsgebundenen Luftverkehrinformationen bekannt, die jeweils bestimmte Einschränkungen oder Notizen hinsichtlich bestimmter Bereiche des Luftraums betreffen. Als internationaler Standard hat sich der NOTAM-Standard etabliert, der Anordnungen und Informationen über temporäre oder permanente Änderungen des Luftverkehrs angibt. Diese NOTAM (**NOT**ice to **A**ir**M**en) Nachrichten an Luftfahrer sind erforderlich, um einen funktionierenden Flugverkehr zu gewährleisten. Diese NOTAM werden sofort veröffentlicht. Insbesondere werden diese Nachrichten auch elektronisch veröffentlicht und zur Abfrage auf Computersystemen zur Verfügung gehalten.

NOTAM Nachrichten haben typischerweise kurzfristigen oder mittelfristigen Charakter und sind üblicherweise befristet gültig. NOTAM, die eine längere Gültigkeit aufweisen, werden eventuell in das Luftfahrthandbuch übernommen und stehen Luftfahrern somit zeitlich so gut wie unbegrenzt zur Verfügung. US 2007/118564 A1 offenbart ein Verfahren zur Bereitstellung von ortsgebundenen Verkehrsinformationen.

US 5 999 946 A offenbart ein Verfahren, wobei ein Datenbanksystem Abfragen empfängt, in einer Datenbank sucht und Resultate an einen Nutzerrechner übermittelt.

Ein großes Problem bei der Verarbeitung von NOTAM liegt darin, dass die Anzahl der derartig gespeicherten Verkehrsinformationen bereits groß ist und ständig ansteigt, da eine sehr große Anzahl von zwischenzeitlich entstehenden oder mittelfristig bestehenden Einschränkungen für das Luftverkehr gegeben sind.

Zur verbesserten Bearbeitung und Verbreitung von NOTAM an einzelne Interessenten werden diese Luftverkehrsinformationen üblicherweise in eine zentrale Datenbank eingespeist, wobei eine Vielzahl von relevanten Ereignissen von unterschiedlichen Aussteller, Originatoren, usw. erstellt und an eine NOTAM-Behörde notifiziert werden und diese NOTAM-Behörde übermittelt die erstellten Verkehrsinformationen an eine zentrale Datenbank. Diese Datenbank hält die in ihr abgespeicherten Verkehrsinformationen für die Abfrage von unterschiedlichen Verkehrsteilnehmern oder Verkehrüberwacher zur Verfügung. Hierfür ist ein NOTAM-Computersystem vorgesehen, der die in der Datenbank abgespeicherten NOTAM für externe Benutzer zur Verfügung hält und insbesondere auch Abfragen in der Datenbank ermöglicht. Dieses Computersystem ist einerseits an die Datenbank angeschlossen und andererseits über das Internet oder andere Netzwerkverbindungen mit den einzelnen Luftverkehrsteilnehmern oder Luftverkehrsüberwachungsdienste, wie Piloten, Luftfahrtkontrolldienste oder Fluggesellschaften verbunden. Selbstverständlich ist es auch möglich, dass Kontrollzentralen wiederum einzelne NOTAM erstellen und über ein NOTAM Office an die zentrale Datenbank übermitteln.

Ein wesentliches Problem dieser Vorgangsweise liegt darin, das eine äußerst große Datenmenge an NOTAM-Daten zur Verfügung gehalten wird und aufgrund diverser Luftverkehrssicherungsprogramme in den Kontrollzentralen oder Flugzeugen NOTAM Nachrichten mit hoher Frequenz, insbesondere in Abständen von 2 bis 60 Sekunden laufend abgefragt werden können. Es ist somit Aufgabe der Erfindung, ein Verfahren zur Verteilung von ortsgebundenen Verkehrsinformationen zur Verfügung zu stellen, mit dem ein hoher Datendurchsatz und eine hohe Abfragerate möglich ist.

Die Erfindung löst diese Aufgabe bei einem Verfahren der eingangs genannten Art mit den kennzeichnenden Merkmalen des Patentanspruches 1.

Eine bevorzugte Art der Abspeicherung von bereits erfolgten Abfragen liegt darin, dass jeder der Datensätze jeweils einen Schlüssel aufweist, der den Datensatz eindeutig identifiziert, und dass für jede getätigte Abfrage jeweils sämtliche Schlüssel der bei der Abfrage ermittelten Datensätze als Resultat abgespeichert werden und gemeinsam mit der Abfrage abgespeichert werden.

Um bei Einlangen neuer Nachrichten oder beim Löschen bestehende Nachrichten eine einfache Anpassung der einzelnen Abfragen zu erreichen kann vorgesehen sein, dass an das Computersystem aufgrund von aktuell einlangenden Veränderungen von Gegebenheiten laufend neue Meldungen übermittelt werden und dass aufgrund dieser Meldungen bestehende Datensätze gelöscht oder geändert werden oder neue Datensätze hinzugefügt werden, und dass bei Einlangen solcher Meldungen, insbesondere beim Hinzufügen neuer Datensätze und/oder beim Löschen und/oder Ändern bestehender Datensätze die abgespeicherten Resultate der bereits durchgeführten Abfragen an die hinzugefügten, geänderten oder gelöschten Datensätze angepasst werden.

Ein besonders rasches und Ressourcen sparendes Vorgehen sieht dabei vor, dass nach Einlagen von Meldungen, mit denen neue Datensätze hinzukommen oder mit denen bestehende Datensätze geändert werden, die bereits durchgeführten Abfragen ausschließlich auf die neu einlangenden oder abgeänderten Datensätze angewendet werden, wobei die den Kriterien der jeweiligen Abfrage genügenden neuen Datensätze dem jeweiligen Resultat der Abfrage hinzugefügt und/oder die den Kriterien der jeweiligen Abfrage nicht mehr genügenden geänderten Datensätze aus dem jeweiligen Resultat der Abfrage entfernt werden.

Ein rasches und effizientes Löschen eines Datensatzes kann vorgenommen werden, indem nach dem Löschen eines bestehenden Datensatzes oder dessen Markierung als gelöscht, insbesondere bei Einlagen einer Löschungsmeldung, der jeweilige Datensatz oder dessen Schlüssel aus den Resultaten der durchgeführten Abfragen gelöscht wird.

Weiters löst die Erfindung die Aufgabe bei einem Computersystem der eingangsgenannten Art mit den kennzeichnenden Merkmalen des Patentanspruches 6. Eine bevorzugte Art der Abspeicherung von bereits erfolgten Abfragen liegt darin, dass jedem Datensatz ein Schlüssel zugeordnet ist, der den jeweiligen Datensatz eindeutig identifiziert und dass die Abfragespeichereinheit in ihrem Resultatspeicher jeweils Speicherbereiche für die einzelnen Schlüssel der Resultate der zugeordneten Abfrage aufweist.

Um bei Einlangen neuer Nachrichten oder beim Löschen bestehender Nachrichten eine einfache Anpassung der einzelnen Abfragen zu erreichen, kann vorgesehen sein, dass eine Meldungsverarbeitungseinheit über ein Aktualisierungsnetzwerk an eine Anzahl von Datenquellen angeschlossen ist, die laufend aufgrund von aktuellen Gegebenheiten Meldungen an die Meldungsverarbeitungseinheit abgeben, aufgrund derer in der Datenbank neue Datensätze hinzuzufügen oder bestehende Datensätze zu ändern oder zu löschen sind, sowie dass eine der Meldungsverarbeitungseinheit nachgeschaltete Aktualisierungseinheit bei Einlangen von Meldungen bei der Meldungsverarbeitungseinheit die abgespeicherten Resultate der bereits durchgeführten Abfragen an die durch die Meldungen bewirkten Änderungen der Datensätze anpasst. Ein besonders rasches und Ressourcen sparendes Vorgehen sieht dabei vor, dass die Aktualisierungseinheit bei Einlangen von Meldungen, mit denen neue Datensätze hinzugefügt oder bestehende Datensätze geändert werden oder die in der Abfragespeichereinheit abgespeicherten Abfragen ausschließlich auf die neu einlangenden oder geänderte Datensätze anwendet und die den Kriterien der jeweiligen Abfrage genügenden neuen Datensätze den jeweiligen Resultaten der Abfrage hinzufügt und zuordnet und die den Kriterien der jeweiligen Abfrage nicht mehr entsprechenden Datensätzen aus den Resultaten entfernt.

Ein rasches und effizientes Löschen eines Datensatzes kann vorgenommen werden, indem die Aktualisierungseinheit bei Vorliegen einer Löschanfrage hinsichtlich eines bestehenden Datensatzes den jeweiligen Datensatz oder den Schlüssel des jeweiligen Datensatzes aus dem Resultatspeicher der Abfragespeichereinheit löscht.

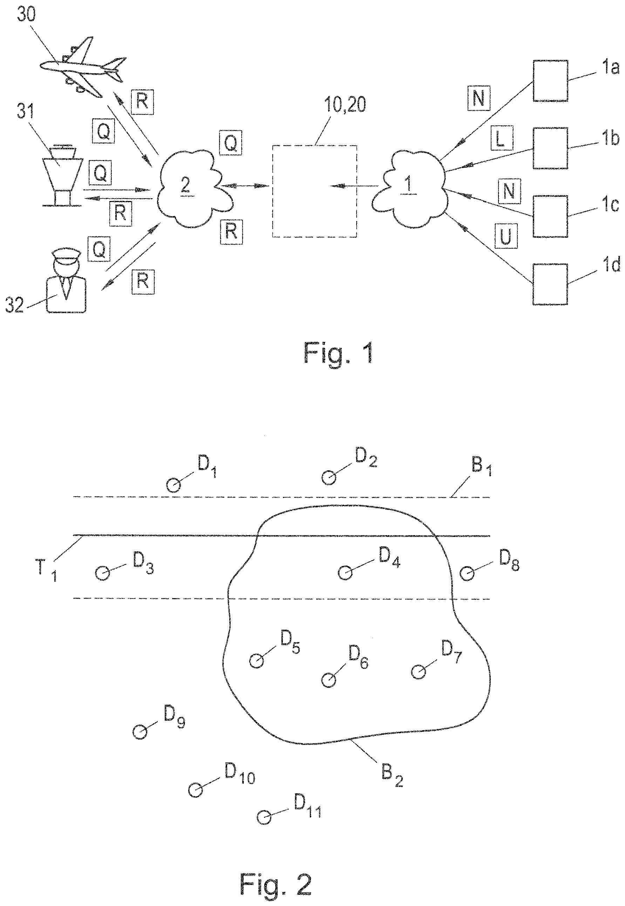

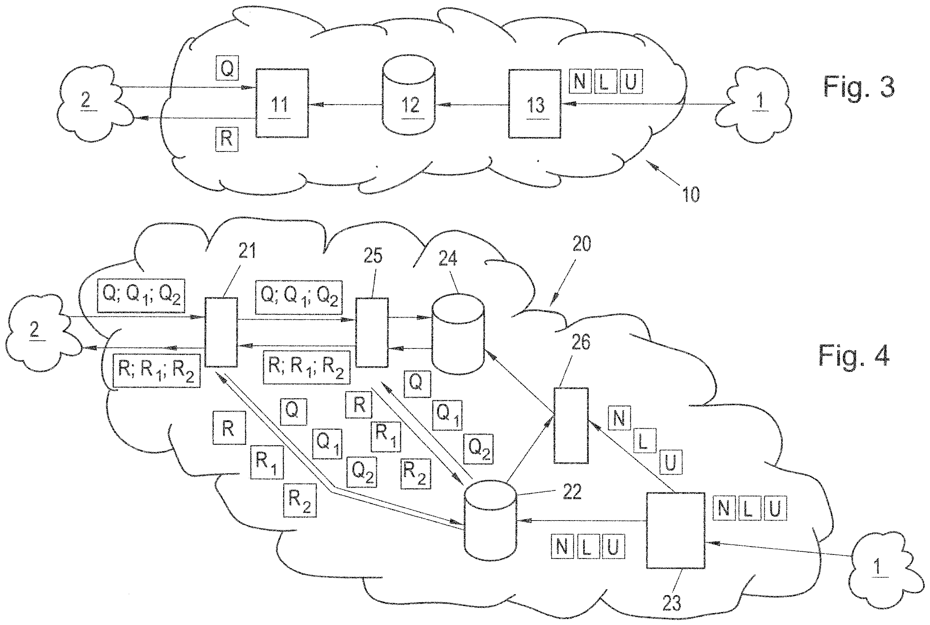

Ein bevorzugtes Ausführungsbeispiel der Erfindung wird anhand der folgenden Zeichnungsfiguren dargestellt. **Fig. 1** zeigt schematisch die Übermittlung und Verteilung von NOTAM-Daten mit einem Computersystem über ein Computernetzwerk. **Fig. 3** zeigt ein bekanntes Computersystem aus dem Stand der Technik. **Fig. 4** zeigt ein Ausführungsbeispiel eines erfindungsgemäßen Computersystems. **Fig. 2** zeigt eine Landkarte mit einer Anzahl von bestimmten Positionen zugeordneten NOTAM-Daten.

Wie in **Fig. 1** dargestellt, werden von unterschiedlichen Datenquellen 1a, 1b, 1c, 1d unterschiedliche Erstell-Meldungen N erstellt, die jeweils mittelfristige Anordnungen und Informationen über temporäre oder permanente Änderungen des Luftverkehrs angeben. Erstell-Meldungen N enthalten Datensätze D, die in der Regel die folgenden Informationen enthalten:
- einen Ortspunkt oder einen Ortsbereich,
- einen zeitlichen Gültigkeitsbeginn,
- gegebenenfalls ein Gültigkeitsende,
- gegebenenfalls weitere Hinweise betreffend eine Luftverkehrsbeeinträchtigung in Form einer Zeichenkette

In **Fig. 2** ist eine Anzahl von NOTAM-Datensätze D; D1, ..., D11 hinsichtlich ihrer jeweiligen geographischen Position dargestellt. Da jedes der NOTAM-Datensätze D1, ..., D11 weist jeweils einen Ortspunkt oder Ortsbereich aufweist, kann eine Vielzahl von NOTAM-Datensätzen D1, ..., D11 gleichzeitig auf einer Karte dargestellt werden.

Darüber hinaus ist es auch möglich, dass einzelne Datenquellen 1 b, 1 d Änderungsmeldungen U, mit denen einzelne Datensätze D abgeändert werden, oder Löschungsmeldungen L, mit denen einzelne Datensätze D gelöscht werden, erstellen.

Sämtliche Erstell-Meldungen N, Änderungsmeldungen U und Löschungsmeldungen L, die für einen Bereich des Luftverkehrs von Relevanz sind, werden über ein Aktualisierungsnetzwerk 1 an einen Server oder ein auf diesem laufendes Service 10, 20 übermittelt und in diesem zwischengespeichert und zusammengefasst.

Langt beim Computersystem 10, 20 eine Erstell-Meldung N ein, so wird in einer Datenbank 12, 22 ein Datensatz D erstellt, der den Inhalt der jeweiligen Erstell-Meldung N enthält. (**Fig. 3, 4**) Langt beim Computersystem 10, 20 eine Änderungsmeldung U ein, so wird in der Datenbank 12,22 der betreffende Datensatz D geändert, auf den sich die Änderungsmeldung U bezieht. Insbesondere werden einzelne oder alle im Datensatz D gespeicherten Informationen durch die in der Änderungsmeldung U enthaltenen Informationen überschrieben.
Langt beim Computersystem 10, 20 eine Löschungsmeldung L ein, so wird der jeweilige Datensatz D, auf den sich die Löschung bezieht, aus der Datenbank 12, 22 entfernt. Anstelle einer vollständigen Löschung des Datensätze ist es auch möglich, den Datensatz als gelöscht zu markieren und für weitere nach der Löschung stattfindende Abfragen zu ignorieren.

Sämtliche einlangenden Meldungen N, U, L werden von einer Meldungsverarbeitungseinheit 13, 23 eingelesen und entsprechend der in den Meldungen N, U, L enthaltenen Informationen verarbeitet, wobei die Meldungsverarbeitungseinheit 13, 23 den Meldungen N, U, L entsprechend die Datenbank 12,22 ansteuert.

Darüber hinaus ist in **Fig. 1** auch dargestellt, wie der Inhalt einzelner Datensätze D an Teilnehmer am Luftverkehr als Nutzerrechner 30, 31, 32 verteilt wird. Hierzu sind die Nutzerrechner 30, 31, 32, beispielsweise Rechner von Fluggesellschaften 30, Rechner in Kontrolltürmen 31 und Rechner der Piloten (tragbare oder stationäre) 32 über ein Abfragenetzwerk 2 an das Computersystem 10, 20 angebunden.

Im vorliegenden Fall stellt sich, wie in **Fig. 2** dargestellt, für einen ersten Nutzerrechner bzw. Verkehrsteilnehmer die Frage, ob innerhalb seiner Flugroute T1, d.h. innerhalb eines Bereichs B1 um seine Flugroute, relevante NOTAM-Datensätze D vorhanden sind. Auch andere Nutzer sind an NOTAM-Datensätzen D interessiert, die sich innerhalb bestimmter Bereiche befinden, so ist beispielsweise für einen anderen Nutzer, einen Fluglotsen, von Interesse, welche NOTAM-Datensätze D sich innerhalb des von ihm kontrollierten Luftraums B2 befinden. Da eine Vielzahl von Flugrouten T1 standardisiert ist, kann es vorkommen, dass Nutzer bzw. Verkehrsteilnehmer, im vorliegenden Fall ein zweiter Verkehrsteilnehmer auch die Flugroute T1 nimmt und an NOTAM-Datensätze D innerhalb des Bereichs B1 interessiert ist.

Jeder einzelne Nutzerrechner 30, 31, 32 kann an das Computersystem 10, 20 über das Abfragenetzwerk 2 Abfragen Q übermitteln. Diese werden von einer Abfrageverarbeitungseinheit 11, 21 des Computersystems 10, 20 empfangen.

Jeder der übermittelten Abfragen Q1, Q2 ist jeweils ein örtlich und zeitlich begrenzter Bereich B1, B2 zugeordnet. Allenfalls können auch weitere Kriterien als Abfragekriterien festlegt werden, die angeben, in wie weit der Nutzer 30, 31, 32 an Verkehrsinformationen interessiert ist. Im vorliegenden Fall legt der erste Verkehrsteilnehmer in seiner Abfrage Q1 fest, dass er an NOTAM-Datensätzen D interessiert ist, die innerhalb des Bereichs B1 um die Route T1 liegen und die während des Zeitraums seines Flugs gültig sind. Der Fluglotse legt in seiner Abfrage Q2 einen örtlichen Bereich B2 fest und fragt nach NOTAM- Datensätzen D, die während der Dauer seines Dienstes gültig sind. Der erste Verkehrsteilnehmer legt darüber hinaus fest, dass er lediglich an NOTAM-Datensätzen D interessiert ist, die für eine Seehöhe von mehr als 10000 ft relevant sind und dass er auch an Informationen für den Instrumentenflug interessiert ist.

Als Suchkriterien können insbesondere verwendet werden:
- örtliche Bereiche
- Beschränkung auf die Gültigkeit der Datensätze
- gebunden an eine zeitliche Beobachtungsdauer, festgelegt durch die Bedürfnisse des Nutzers; beispielsweise kann bei dem Flug eines Linienflugs vom Wien nach Berlin, geplanter Abflug 10:00h, geplante Landung 11:30h, mögliche Verspätung beim Abflug 1 h, mögliche Verzögerung der Landung 15min wegen Flugverkehrs ein Zeitfenster zwischen 10:00h und 12:45h relevant sein
- weitere den Datensätzen zugeordnete semantische Information
- Abflüge nach NOTAM-Typ: Schließung von Luftraum, von Flughäfen, Hindernissen usw.

In einer weiteren bevorzugten Ausführungsform ist es möglich, eine eindeutige Identifikation des Nutzers 30, 31, 32 sowie eine Zuordnung des Nutzers zu den vom ihm übermittelten Abfragen Q mittels eines oder mehrerer Identifikationsschlüssels zu erstellen. Durch die Verwendung dieses Identifikationsschlüssels könnten gespeicherte Abfragen Q rasch aufgefunden werden.

Die Lebensdauer der gespeicherten Abfragen Q kann dabei an die vom Nutzer 30, 31, 32 angegebene Beobachtungsdauer gebunden werden. Nach dem Ablauf des Beobachtungsdauer wird die Abfrage Q aus der Datenbank entfernt.

Nachdem die Abfrage Q1 vom ersten Verkehrsteilnehmer an das Computersystem 10, 20 (**Fig. 3, 4**) übermittelt worden ist, werden mittels der Abfrageverarbeitungseinheit 11, 21 aus der die NOTAM-Datensätze D enthaltenden Datenbank 12, 22 diejenigen NOTAM-Datensätze D ausgewählt, die innerhalb des jeweiligen Bereichs der Abfrage Q1, Q2 liegen und gegebenenfalls noch weiteren Kriterien genügen. Im Zuge der Durchführung der Abfrage Q1 werden die Datensätze D3, D4 und D8 ausgewählt und an den ersten Verkehrsteilnehmer übermittelt. Ebenso werden als Antwort auf die Abfrage Q2 des Fluglotsen die NOTAM-Datensätze D4, D5, D6, D7 übermittelt, deren zugeordneter Ortspunkt oder Ortsbereich innerhalb des vom Fluglotsen überwachten Bereichs B2 liegen. Die Abfrageverarbeitungseinheit 11, 21 des Computersystems 10, 20 übermittelt jeweils einen Antwortdatensatz R1, R2, der sämtliche für die jeweilige Abfrage Q1, Q2 ermittelten NOTAM-Datensätze D enthält.

Der zweite Verkehrsteilnehmer, der eine weitere Abfrage Q1' an das Computernetzwerk 10, 20 übermittelt, deren örtlicher Abfragebereich mit dem örtlicher Abfragebereich der Abfrage Q1 identisch ist, erhält bei dem in den **Fig. 3 und 4** dargestellten Computersystems 10, 20 wiederum diejenigen NOTAM-Datensätze D in einem Resultat-Datensatz R übermittelt, die innerhalb des jeweiligen Bereichs B der Abfrage Q liegen und gegebenenfalls noch weiteren Kriterien genügen. Das in **Fig. 3** dargestellte Computersystem 10 ermittelt die betreffenden NOTAM-Datensätze D sowie den Resultat-Datensatz R durch erneute Durchführung der vom Nutzerrechner vorgegebenen Abfrage Q1', was insbesondere bei periodisch innerhalb kurzer Zeitspannen durchgeführten mehrfachen Abfragen mit demselben Inhalt zu einer großen Belastung des Computernetzwerks 10 führen kann.

Das in **Fig. 4** dargestellte erfindungsgemäße Ausführungsbeispiel eines Computersystem s 20 weist gegenüber bekannten Computersystemen 10 eine verringerte Ressourcenbelastung auf und verfügt neben der vom Computersystem 10 bekannten Abfrageverarbeitungseinheit 21, Datenbank 22 und Meldungsverarbeitungseinheit 23 über eine Abfragekontrolleinheit 25. Der Abfragekontrolleinheit 25 sind alle beim Computersystem 20 einlangenden Abfragen Q sowie die nach Verarbeitung dieser Abfragen Q ermittelten von der Datenbank 22 erstellten Resultate R zugeführt. Die Abfragekontrolleinheit 25 übermittelt die jeweilige Abfragen Q gemeinsam mit dem der jeweiligen Abfrage Q zugeordnete Resultat R an eine ihr zugeordnete Abfragespeichereinheit 24. Die Abfragespeichereinheit 24 ist im vorliegenden Ausführungsbeispiel als Datenbank ausgebildet, in der jeweils eine Zuordnung zwischen einer Abfrage Q oder dem der Abfrage Q zugeordneten Ortsbereich und einem Resultat R in Form einer Menge von NOTAM-Datensätzen D abgespeichert ist.

Sofern bei der Abfragekontrolleinheit 25 eine Abfrage Q eingeht, deren örtlich begrenzten Bereich mit dem örtlich begrenzten Beriech einer bereits abgearbeiteten Abfrage Q' übereinstimmt, unterbleibt die Durchführung einer aufwendigen unmittelbaren Abfrage bei der Datenbank 22; stattdessen werden die gemeinsam mit der Abfrage Q in der Abfragespeichereinheit 24 abgelegten NOTAM-Datensätze D in Form eines Resultat-Datensatzes R an die Abfrageverarbeitungseinheit 21 und von dieser an den die Abfrage Q erstellenden Nutzerrechner 30, 31, 32 übermittelt.

Sofern eine solche Abfrage Q jedoch noch nicht durchgeführt worden ist und in der Abfragespeichereinheit 24 ein die Abfrage Q enthaltender Eintrag nicht vorhanden ist, wird die Abfrage Q an die Datenbank 22 übermittelt und von dieser verarbeitet. Anschließend wird das ermittelte Resultat R einerseits an den die Abfrage Q erstellenden Nutzerrechner 30, 31, 32 und andererseits an die Abfragespeichereinheit 24 übermittelt und in dieser gemeinsam mit der Abfrage Q abgelegt.

Wird somit vom zweiten Verkehrsteilnehmer eine Abfrage an das Computersystem 20 übermittelt, wobei der örtliche Abfragebereich B1 mit dem Abfragebereich einer bereits beantworteten Abfrage übereinstimmt, so kann eine erneute aufwendige Abfrage bei der Datenbank 24 unterbleiben. Es können stattdessen die in der Abspeichereinheit 24 gespeicherten Resultate R auch die Abfragen übermittelnden Nutzerrechner 30, 31, 32 zurückgegeben werden.

Bei einer bevorzugten Weiterbildung des dargestellten erfindungsgemäßen Computersystems 20 wird auch der Umstand berücksichtigt, dass einzelne bereits ermittelte Resultate R für Abfragen Q aufgrund neu eingelangter, geänderter oder gelöschter NOTAM-Datensätze D nicht mehr aktuell sind.

Langen beispielsweise Änderungsmeldungen U, Löschungsmeldungen L oder Erstell-Meldungen N über das erste Netzwerk 1 beim Computersystem 20 ein, so kann dies dazu führen, dass die in der Abfragespeichereinheit 24 abgespeicherten Resultate R für bestimmte Abfragen Q nicht mit denjenigen Resultaten R übereinstimmen, die sich bei Durchführung der Abfrage Q bei der aktualisierten Datenbank 22 ergeben.

Um bei Vorliegen von Änderungsmeldungen U, Löschungsmeldungen L oder Erstell-Meldungen N konsistente Abfrageergebnisse zu erzielen, d.h. dass dieselbe Abfrage Q jeweils dasselbe Ergebnis liefert, unabhängig davon ob aus der Datenbank 22 unmittelbar abgefragt wird oder ob das Ergebnis aus der Abfragespeichereinheit 24 stammt, ist eine Aktualisierungseinheit 26 vorgesehen, die bei Einlangen solcher Meldungen U, L, N die Abfragespeichereinheit 24, wie im Folgenden dargestellt, aktualisiert.

Die Aktualisierungseinheit 26 ist der Meldungsverarbeitungseinheit 23 nachgeschaltet, die die Aktualisierung der Datenbank 22 vornimmt. Sämtliche einlangenden Meldungen U, L, N werden von der Meldungsverarbeitungseinheit 23 an die Aktualisierungseinheit 26 weitergeleitet. Die Aktualisierungseinheit 26 verfügt über einen Zugang zur Datenbank 22 sowie auf die Abfragespeichereinheit 24.

Langen bei der Aktualisierungseinheit 26 Erstell-Meldungen N ein, mit denen neue NOTAM-Datensätze D in der Datenbank 22 angelegt werden, so wird für sämtliche dieser neuen NOTAM-Datensätze D untersucht, ob sie die Bedingungen der bereits in der Abfragespeichereinheit 24 abgespeicherten Abfragen Q erfüllen. Die Abfrage Q wird dabei ausschließlich auf die neu hinzukommenden NOTAM-Datensätze D angewendet, die übrigen NOTAM-Datensätze D bleiben bei diesem Aktualisierungsschritt unberührt. Die den Kriterien der jeweiligen Abfrage Q genügenden neuen NOTAM-Datensätze D werden den jeweiligen Resultaten R der jeweiligen Abfrage Q von der Aktualisierungseinheit 26 hinzugefügt und zugeordnet.

Langen bei der Aktualisierungseinheit 26 Änderungsmeldungen U ein, so werden die in der Abfragespeichereinheit 24 abgespeicherten Abfragen Q ausschließlich auf die geänderten NOTAM-Datensätze D angewandt.
Für den Fall, dass ein aktualisierter NOTAM-Datensatz D der Abfrage Q genügt, wird der NOTAM-Datensatz D dem Resultat R zugeordnet oder, sofern er bereits zuvor dem Resultat R zugeordnet war, bleibt das der Abfrage Q zugeordnete Resultat R unverändert. Für den Fall, dass ein aktualisierter NOTAM-Datensatz D der Abfrage Q nicht genügt, wird der NOTAM-Datensatz D aus dem Resultat R gelöscht oder, sofern er zuvor dem Resultat R ohnehin nicht zugeordnet war, bleibt das der Abfrage Q zugeordnete Resultat R unverändert.

Langt bei der Aktualisierungseinheit 26 eine Löschungsmeldung L ein, wird der in der Löschungsmeldung L bezeichnete NOTAM-Datensatz D aus sämtlichen Resultaten R in der Abfragespeichereinheit 24 gelöscht.

Zur einfachen Handhabung können die einzelnen NOTAM-Datensätze D jeweils durch Schlüssel repräsentiert werden, wobei jedem der NOTAM-Datensätze D jeweils ein eindeutiger, ihn identifizierender Schlüssel zugeordnet ist. Zur Abspeicherung von Resultaten umfassend jeweils eine Menge von NOTAM-Datensätzen D kann jeweils die Menge der die NOTAM-Datensätze D identifizierenden Schlüssel herangezogen werden.

Eine bevorzugte Ausführungsform der Erfindung kann mit folgender weiterer Verbesserung ausgestattet sein: Die Abfrageeinrichtung des Nutzers 30, 31, 32 ist in der Lage, Resultate in einem lokalen Cache-Speicher zu zwischenspeichern. Bei der Übermittlung der Abfrage Q vom Nutzer 30, 31, 32 an den Server 20 wird das nutzerseitige Vorhandensein von Resultaten R aus einer vorigen Abfrage Q vorausgesetzt. Weiters kann auch angegeben werden, wann die vorherige Abfrage Q durchgeführt wurde. Falls das Resultat R seither keine Änderungen durch Erstell-, Änderungs- und Löschmeldungen N, U, L erfahren hat, wird anstatt des gesamten Resultats umfassend sämtliche darin enthaltene NOTAM-Daten, nur eine kurze Bestätigung gesendet, dass das Resultat unverändert geblieben ist. Hierdurch wird die Menge der zu übertragende Daten reduziert.

## Patentansprüche

1. Verfahren zur Bereitstellung von ortsgebundenen Verkehrsinformationen, durch ein Computersystem (20), wobei die Verkehrsinformationen als Datensätze (D) in einer Datenbank (22) des Computersystems (20) abgespeichert werden,
- wobei die Datensätze (D) jeweils einen geografischen Ortspunkt oder einen Ortsbereich, einen zeitlichen Gültigkeitsbeginn, und
- wobei eine Abfrage (Q) von einem Nutzerrechner (30, 31, 32) über ein Nutzernetzwerk (2) an das Computernetzwerk (20) übermittelt wird und die Abfrage (Q) einen örtlich, und insbesondere zeitlich, begrenzten Bereich (B1, B2) und gegebenenfalls weitere Kriterien als Abfragekriterien festlegt, die angeben, an welchen Verkehrsinformationen der jeweilige den Nutzerrechner (30, 31, 32) bedienende Nutzer interessiert ist, und
- wobei das Computersystem (20) bei Einlangen einer Abfrage (Q) diejenigen Datensätze (D) aus der Datenbank (22) auswählt, deren jeweils zugeordneter Ortspunkt oder Ortsbereich sich innerhalb des in der Abfrage (Q) angegebenen örtlich, und insbesondere zeitlich, begrenzten Bereichs (B1, B2) befindet und die den allenfalls vorgegebenen weiteren Abfragekriterien der Abfrage (Q) genügen, und diese Datensätze (D) als Resultat (R) der Abfrage (Q) an den jeweiligen Nutzerrechner (30, 31, 32) übermittelt,
- wobei jede beim Computersystem (20) einlangende Abfrage (Q) nach ihrer Verarbeitung gemeinsam mit ihrem Resultat (R) abgespeichert wird und dieser zugeordnet wird, und
- wobei bei Einlangen einer weiteren Abfrage (Q'), deren örtlich begrenzter Bereich (B1, B2), und gegebenenfalls auch deren weitere Abfragekriterien, mit dem örtlich begrenzten Bereich (B1, B2), gegebenenfalls auch mit den weiteren Abfragekriterien, einer bereits durchgeführten Abfrage (Q) identisch ist oder sind, das der Abfrage (Q) zugeordnete abgespeicherte Resultat (R) an den Nutzerrechner (30, 31, 32) übermittelt wird,
**dadurch gekennzeichnet,**
- dass ein Nutzerrechner (30, 31, 32) beim erstmaligen Übermitteln einer Abfrage (Q) einen dieser Abfrage zugeordneten Identifikationsschlüssel erhält, dem eine Gültigkeitsdauer zugewiesen ist, und dass während der Gültigkeitsdauer des Identifikationsschlüssels die Abfrage auch durch Übertragung des Identifikationsschlüssels durchgeführt werden kann, und
- dass bei erstmaliger Übermittlung einer Abfrage (Q) durch einen Nutzerrechner (30, 31, 32) das ermittelte Resultat (R) im Nutzerrechner (30, 31, 32) abgespeichert wird, und bei nochmaliger Übermittlung derselben Abfrage (Q) dieser Abfrage (Q) oder dem der Abfrage (Q) zugeordneten Identifikationsschlüssel der Zeitpunkt der letztmaligen Übermittlung der Abfrage (Q) durch den Nutzerrechner (30, 31, 32) zugeordnet wird, und für den Fall, dass sich das Resultat (R) der Abfrage (Q) seit der letztmaligen Übermittlung der Abfrage (Q) nicht geändert hat, eine diesbezügliche Meldung anstelle des Resultats (R) dem Nutzerrechner (30, 31, 32) übermittelt wird.

2. Verfahren nach Anspruch 1, **dadurch gekennzeichnet, dass** jeder der Datensätze (D) jeweils einen Schlüssel aufweist, der den Datensatz (D) eindeutig identifiziert, und dass für jede getätigte Abfrage (Q) jeweils sämtliche Schlüssel der bei der Abfrage (Q) ermittelten Datensätze (D) als Resultat (R) abgespeichert werden und gemeinsam mit der Abfrage (Q) abgespeichert werden.

3. Verfahren nach einem der vorangehenden Ansprüche, **dadurch gekennzeichnet,**
- **dass** an das Computersystem (1) aufgrund von aktuell einlangenden Veränderungen von Gegebenheiten laufend neue Meldungen (N, L, U) übermittelt werden und dass aufgrund dieser Meldungen (N, L, U) bestehende Datensätze (D) gelöscht oder geändert werden oder neue Datensätze (D) hinzugefügt werden, und
- **dass** bei Einlangen solcher Meldungen (N, L, U), insbesondere beim Hinzufügen neuer Datensätze (D) und/oder beim Löschen und/oder Ändern bestehender Datensätze (D) die abgespeicherten Resultate (R) der bereits durchgeführten Abfragen (Q) an die hinzugefügten, geänderten oder gelöschten Datensätze (D) angepasst werden.

4. Verfahren nach Anspruch 3, **dadurch gekennzeichnet, dass** nach Einlagen von Meldungen (N, U), mit denen neue Datensätze (D) hinzukommen oder mit denen bestehende Datensätze geändert werden, die bereits durchgeführten Abfragen (Q) ausschließlich auf die neu einlangenden oder abgeänderten Datensätze (D) angewendet werden, wobei die den Kriterien der jeweiligen Abfrage (Q) genügenden neuen Datensätze (D) dem jeweiligen Resultat (R) der Abfrage (Q) hinzugefügt und/oder die den Kriterien der jeweiligen Abfrage (Q) nicht mehr genügenden geänderten Datensätze (D) aus dem jeweiligen Resultat (R) der Abfrage (Q) entfernt werden.

5. Verfahren nach Anspruch 3 oder 4, **dadurch gekennzeichnet, dass** nach dem Löschen eines bestehenden Datensatzes (D) oder dessen Markierung als gelöscht, insbesondere bei Einlagen einer Löschungsmeldung (L), der jeweilige Datensatz (D) oder dessen Schlüssel (K) aus den Resultaten (R) der durchgeführten Abfragen (Q) gelöscht wird.

6. Computersystem (20) zur Bereitstellung von ortsgebunden Verkehrsinformationen, insbesondere Luftverkehrs- oder Seeverkehrsinformationen, umfassend eine Datenbank (22), wobei die Verkehrsinformationen in Form von Datensätzen (D) in der Datenbank (22) des Computersystems (20) abgespeichert vorliegen,
- wobei in der Datenbank (22) für jeden der Datensätze (D) jeweils ein entsprechender Speicher für einen Ortspunkt oder einen Ortsbereich sowie ein weiterer Speicher für den zeitlichen Gültigkeitsbeginn und gegebenenfalls noch ein weiterer Speicher für das Gültigkeitsende sowie gegebenenfalls noch ein weiterer Speicher für weitere Hinweise betreffend eine Luftverkehrsbeeinträchtigung vorgesehen sind,
- wobei das Computersystem (20) über ein Abfragenetzwerk (2) mit einem Nutzerrechner (30, 31, 32), insbesondere einen in einer Kontrollzentrale befindlichen Rechner oder einem in einem Flugzeug befindlichen Rechner, in Datenverbindung steht,
- wobei das Computersystem (20) eine Abfrageverarbeitungseinheit (21) aufweist, die bei Einlangen einer Abfrage (Q) von einem Rechner über das Netzwerk (2) an das Computersystem (20) diese Abfrage (Q) analysiert, wobei die Abfrage (Q) einen örtlich und gegebenenfalls zeitlich begrenzten Bereich, sowie die gegebenenfalls weiteren Kriterien, als Abfragekriterien aufweist, wobei die Abfrageverarbeitungseinheit (21) in der Datenbank (22) nach Datensätzen (D) sucht und Datensätze (D) aus der Datenbank (22) auswählt, deren jeweils zugeordneter Ortspunkt oder Ortsbereich sich innerhalb des in der Abfrage (Q) angegebenen örtlich begrenzten Bereichs (B) befindet und die den allenfalls vorgegebenen weiteren Abfragekriterien der Abfrage genügen und diese Datensätze (D) als Resultat der Abfrage (Q) an den jeweiligen Nutzerrechner (30, 31, 32) ermittelt,
- wobei eine der Abfrageverarbeitungseinheit (21) nachgeschaltete Abfragekontrolleinheit (25) vorgesehen ist, der jede beim Computersystem (20) einlangende Abfrage (Q) nach ihrer Verarbeitung gemeinsam mit dem errechneten Resultat (R) zugeführt ist und die Abfrage (Q) sowie das Resultat (R) an eine Abfragespeichereinheit (24) übermittelt,
dass die Abfragekontrolleinheit (25) bei Einlangen einer weiteren Abfrage (Q') überprüft, ob deren örtlich begrenzter, und gegebenenfalls auch deren weitere Abfragekriterien, mit dem örtlich begrenzten Bereich, gegebenenfalls auch mit dem weiteren Abfragekriterien, einer bereits durchgeführten Abfrage (Q) identisch ist oder sind,
- wobei die Abfragekontrolleinheit (25) in diesem Fall das der bereits durchgeführten Abfrage (Q) zugeordnete abgespeicherte Resultat (R) an den Nutzerrechner (30, 31, 32) übermittelt und
andernfalls die Abfrageverarbeitungseinheit (21) die einlangende Abfrage (Q) an die Datenbank (22) weiterleitet, die die Abfrage (Q) verarbeitet und das so ermittelte Resultat an den Nutzerrechner übermittelt,
**dadurch gekennzeichnet,**
- dass die Abfrageverarbeitungseinheit (21) einem Nutzerrechner (30, 31, 32) beim erstmaligen Übermitteln einer Abfrage (Q) einen dieser Abfrage zugeordneten Identifikationsschlüssel zuteilt, dem eine Gültigkeitsdauer zugewiesen ist, und dass der Nutzerrechner (30, 31, 32) während der Gültigkeitsdauer des Identifikationsschlüssels die Abfrage durch Übertragung des Identifikationsschlüssels durchführt, und
- dass der Nutzerrechner (30, 31, 32) bei erstmaliger Übermittlung einer Abfrage (Q)durch einen Nutzerrechner (30, 31, 32) das ermittelte Resultat (R) im Nutzerrechner (30, 31, 32) abspeichert,
und bei nochmaliger Übermittlung derselben Abfrage (Q) dieser Abfrage (Q) oder dem der Abfrage (Q) zugeordneten Identifikationsschlüssel der Zeitpunkt der letztmaligen Übermittlung der Abfrage (Q) durch den Nutzerrechner (30, 31, 32) zugeordnet wird, und die Abfrageverarbeitungseinheit (21) für den Fall, dass sich das Resultat (R) der Abfrage (Q) seit der letztmaligen Übermittlung der Abfrage (Q) nicht geändert hat, eine diesbezügliche Meldung anstelle des Resultats (R) dem Nutzerrechner (30, 31, 32) übermittelt.

7. Computersystem (20) nach Anspruch 6 **dadurch gekennzeichnet, dass** jedem Datensatz (D) ein Schlüssel (K) zugeordnet ist, der den jeweiligen Datensatz (D) eindeutig identifiziert und dass die Abfragespeichereinheit (24) in ihrem Resultatspeicher jeweils Speicherbereiche für die einzelnen Schlüssel der Resultate der zugeordneten Abfrage (Q) aufweist.

8. Computersystem (20) nach einem der Ansprüche 6 oder 7 **gekennzeichnet durch** eine Meldungsverarbeitungseinheit (23), die über ein Aktualisierungsnetzwerk (1) an eine Anzahl von Datenquellen (1a....1d) angeschlossen ist, die laufend aufgrund von aktuellen Gegebenheiten Meldungen (L, N, U) an die Meldungsverarbeitungseinheit (23) abgeben, aufgrund derer in der Datenbank (24) neue Datensätze (D) hinzuzufügen oder bestehende Datensätze (D) zu ändern oder zu löschen sind, sowie
- eine der Meldungsverarbeitungseinheit (23) nachgeschaltete Aktualisierungseinheit (26), die bei Einlangen von Meldungen (L, N, U) bei der Meldungsverarbeitungseinheit (23) die abgespeicherten Resultate (R) der bereits durchgeführten Abfragen (Q) an die **durch** die Meldungen bewirkten Änderungen der Datensätze (D) anpasst.

9. Computersystem (20) nach Anspruch 8 **dadurch gekennzeichnet, dass** die Aktualisierungseinheit (26) bei Einlangen von Meldungen, mit denen neue Datensätze (D) hinzugefügt oder bestehende Datensätze (D) geändert werden oder die in der Abfragespeichereinheit (24) abgespeicherten Abfragen (Q) ausschließlich auf die neu einlangenden oder geänderte Datensätze (D) anwendet und die den Kriterien der jeweiligen Abfrage (Q) genügenden neuen Datensätze (D) den jeweiligen Resultaten (R) der Abfrage (Q) hinzufügt und zuordnet und die den Kriterien der jeweiligen Abfrage (Q) nicht mehr entsprechenden Datensätzen (D) aus den Resultaten entfernt.

10. Computersystem (20) nach Anspruch 8 oder 9 **dadurch gekennzeichnet, dass** die Aktualisierungseinheit (26) bei Vorliegen einer Löschanfrage (L) hinsichtlich eines bestehenden Datensatzes (D) den jeweiligen Datensatz (D) oder den Schlüssel des jeweiligen Datensatzes (D) aus dem Resultatspeicher der Abfragespeichereinheit (24) löscht.

11. Datenträger, auf dem ein Programm zur Durchführung eines Verfahrens nach einem der Ansprüche 1 bis 5 abgespeichert ist.

## Claims

1. A method for the provision of location-specific transport information by a computer system (20),
wherein the transport information is stored as data sets (D) in a database (22) of the computer system (20),
- wherein the data sets (D) in each case have a location point or a location area, a temporal beginning of the validity period,
and
- wherein a query (Q) is transmitted by a user computer (30, 31, 32) via a user network (2) to the computer network (20) and the query (Q) defines a locally, and, in particular, temporally, limited area (B1, B2) and, if necessary, further criteria as query criteria, which indicate, which transport information the respective user operating the user computer (30, 31, 32) is interested in, and
- wherein the computer system (20) upon receipt of a query (Q) selects those data sets (D) from the database (22), the assigned location point or location area of which in each case is located within the locally, and, in particular, temporally, limited area (B1, B2) indicated in the query (Q) and which meet the, if need be, predetermined further query criteria of the query (Q), and transmits these data sets (D) as the result (R) of the query (Q) to the respective user computer (30, 31, 32),
- wherein each query (Q) received by the computer system (20) is stored after its processing together with its result (R) and is assigned to the latter, and
- wherein upon receipt of a further query (Q'), whose locally limited area (B1, B2), and, if necessary, also further query criteria of which is or are also identical with the locally limited area (B1, B2), if necessary, also with the further query criteria, of an already carried out query (Q), which stored result (R) assigned to the query (Q) is transmitted to the user computer (30, 31, 32),
**characterized in**
- that a user computer (30, 31, 32) when transmitting a query (Q) for the first time receives an identification key assigned to this query, to which a period of validity is assigned, and that during the period of validity of the identification key the query can also be carried out by transmission of the identification key, and
- that when transmitting a query (Q) for the first time through a user computer (30, 31, 32) the determined result (R) is stored in the user computer (30, 31, 32), and when the same query (Q) is transmitted again the point in time of the last transmission of the query (Q) by the user computer (30, 31, 32) is assigned to this query (Q) or to the identification key assigned to the query (Q), and in the event that the result (R) of the query (Q) has not changed since the last transmission of the query (Q), such a message is transmitted to the user computer (30, 31, 32) instead of the result (R).

2. A method according to Claim 1, **characterized in that** each of the data sets (D) in each case has a key, which clearly identifies the data set (D), and that for each query (Q) made in each case all of the keys of the data sets (D) determined in the query (Q) are stored as a result (R) and are stored together with the query (Q).

3. A method according to any one of the preceding claims, **characterized in**
- **that** new messages (N, L, U) based on currently received changes of circumstances are constantly transmitted to the computer system (1) and that on the basis of these messages (N, L, U) existing data sets (D) are deleted or amended or new data sets (D) are added, and
- **that** when such messages (N, L, U) are received, in particular when new data sets (D) are added and/or when existing data sets (D) are deleted and/or amended the stored results (R) of the already carried out queries (Q) are adapted to the added, amended or deleted data sets (D).

4. A method according to Claim 3, **characterized in that** after receipt of messages (N, U), with which new data sets (D) are added or with which existing data sets are amended, the already carried out queries (Q) are exclusively applied to the newly received or amended data sets (D), wherein the new data sets (D) which meet the criteria of the respective query (Q) are added to the respective result (R) of the query (Q) and/or the amended data sets (D) which no longer meet the criteria of the respective query (Q) are removed from the respective result (R) of the query (Q).

5. A method according to Claim 3 or 4, **characterized in that** after the deletion of an existing data set (D) or its marking as deleted, in particular when a deletion message (L) is received, the respective data set (D) or its key (K) is deleted from the results (R) of the queries (Q) carried out.

6. A computer system (20) for the provision of location-specific transport information, in particular air transport or sea transport information, comprising a database (22), wherein the transport information exists stored in the form of data sets (D) in the database (22) of the computer system (20),
- wherein in the database (22) for each of the data sets (D) in each case an appropriate memory for a location point or a location area as well as a further memory for the temporal beginning of the validity period and if necessary yet another memory for the end of the validity period as well as if necessary yet another memory for further information regarding an impairment of air transport are provided.
- wherein the computer system (20) is in data connection via a query network (2) with a user computer (30, 31, 32), in particular, a computer located in a control center or a computer located in an airplane,
- wherein the computer system (20) has a query processing unit (21), which when a query (20) is received from a computer via the network (2) at the computer system (20) analyzes this query (Q), wherein the query (Q) has a locally and, if necessary, temporally limited area, as well as the, if necessary, further criteria, as query criteria, wherein the query processing unit (21) searches for data sets (D) in the database (22) and selects data sets (D) from the database (22), the assigned location point or location area of which in each case is located within the locally limited area (B) indicated in the query (Q) and which meet the, if need be, predetermined further query criteria of the query and determines these data sets (D) as the result of the query (Q) to the respective user computer (30, 31, 32),
- wherein a query control unit (25) connected downstream of the query processing unit (21) is provided, which is supplied with each query (Q) received by the computer system (20) after its processing together with the computed result (R) and transmits the query (Q) as well as the result (R) to a query memory unit (24), that the query control unit (25) when a further query (Q') is received examines whether its locally limited, and, if necessary, also its further query criteria, is or are identical with the locally limited area, if necessary, also with the further query criteria, of an already carried out query (Q),
- wherein the query control unit (25) in this case transmits the stored result (R) assigned to the already carried out query (Q) to the user computer (30, 31, 32) and otherwise the query processing unit (21) forwards the received query (Q) to the database (22), which processes the query (Q) and transmits the thus determined result to the user computer,
**characterized in**
- **that** the query processing unit (21) assigns an identification key assigned to this query to a user computer (30, 31, 32) when transmitting a query (Q) for the first time to which a period of validity is assigned, and that during the period of validity of the identification key the user computer (30, 31, 32) carries out the query by transmission of the identification key, and
- **that** when a query (Q) is transmitted for the first time by a user computer (30, 31, 32) the user computer (30, 31, 32) stores the determined result (R) in the user computer (30, 31, 32),
- and when the same query (Q) is transmitted again the point in time of the last transmission of the query the user computer (30, 31, 32) is assigned to this query (Q) or to the identification key assigned to the query (Q), and in the event that the result (R) of the query (Q) has not changed since the last transmission of the query (Q), the query processing unit (21) transmits such a message to the user computer (30, 31, 32) instead of the result (R).

7. A computer system (20) according to Claim 6, **characterized in that** a key (K) is assigned to each data set (D), which key clearly identifies the respective data set (D) and that the query memory unit (24) in each case has memory areas in its result memory for the individual keys of the results of the assigned query (Q).

8. A computer system (20) according to any one of Claims 6 or 7 **characterized in that** a message processing unit (23), which is connected via an updating network (1) to a number of data sources (1a .... 1d), which based on current circumstances constantly output messages (L, N, U) to the message processing unit (23), on the basis of which new data sets (D) must be added or existing data sets (D) must be amended or deleted in the data base (24), as well as - an updating unit (26) connected downstream of the message processing unit (23), which when messages (L, N, U) are received by the message processing unit (23) adapt the stored results (R) of the already carried out queries (Q) to the amendments of the data sets (D) effected by the messages.

9. A computer system (20) according to Claim 8, **characterized in that** the updating unit (26) upon receipt of messages, with which new data sets (D) are added or existing data sets (D) are amended or the queries (Q) stored in the query memory unit (24) are applied exclusively to the newly received or amended data sets (D) and the new data sets (D) which meet the criteria of the respective query (Q) are added or assigned to the respective results (R) of the query (Q) and the data sets (D) which no longer meet the criteria of the respective query (Q) are removed from the results.

10. A computer system (20) according to Claim 8 or 9, **characterized in that** when there is a delete request (L) with respect to an existing data set (D) the updating unit (26) deletes the respective data set (D) or the key of the respective data set (D) from the result memory of the query memory unit (24).

11. A data carrier, on which a program is stored for the implementation of a method according to any one of Claims 1 to 5.

## Revendications

1. Procédé pour la mise à disposition d'informations de trafic locales par un système informatique (20), les informations de trafic étant enregistrées sous la forme d'ensembles de données (D) dans une base de données (22) du système informatique (20),
- les ensembles de données (D) présentant chacun une localisation géographique ou une zone locale, un début de validité dans le temps et
- une requête (Q) étant transmise par un ordinateur utilisateur (30, 31, 32) par l'intermédiaire d'un réseau utilisateur (2) au réseau informatique (20) et la requête (Q) déterminant une zone (B1, B2) limitée localement et plus particulièrement temporellement et, le cas échéant, des critères supplémentaires en tant que critères de requête, qui indiquent quelles informations de trafic intéressent l'utilisateur qui se sert de l'ordinateur utilisateur (30, 31, 32) et
- le système informatique (20) sélectionnant, lors de l'arrivée d'une requête (Q), les ensembles de données (D) dans la base de données (22) dont la localisation ou la zone locale se trouve à l'intérieur de la zone (B1, B2), limitée localement et plus particulièrement temporellement, indiquée dans la requête (Q) et qui satisfont les critères supplémentaires de la requête (Q) et ses ensembles de données (D) étant transmis en tant que résultat (R) de la requête (Q) à l'ordinateur utilisateur (30, 31, 32) correspondant,
- chaque requête (Q) arrivant dans le système informatique (20), après son traitement, avec son résultat (R) et celui-ci étant mis en correspondance et
- lors de l'arrivée d'une requête supplémentaire (Q') dont la zone limitée localement (B1, B2) et, le cas échéant également ses critères de requête supplémentaires, est ou sont identique(s) à la zone limitée localement (B1, B2), le cas échéant également avec les critères de requête supplémentaires, d'une requête (Q) déjà effectuée, le résultat (R) enregistré correspondant à la requête (Q) est transmis à l'ordinateur utilisateur (30, 31, 32),
**caractérisé en ce que**
- un ordinateur utilisateur (30, 31, 32) obtient, lors de la première transmission d'une requête (Q), une clé d'identification correspondant à cette requête, à laquelle est attribuée une durée de validité et **en ce que** pendant la durée de validité de la clé d'identification, la requête peut également être effectuée par transmission de la clé d'identification et
- lors de la première transmission d'une requête (Q) par un ordinateur utilisateur (30, 31, 32), le résultat (R) déterminé est enregistré dans l'ordinateur utilisateur (30, 31, 32) et, lors d'une transmission ultérieure de la même requête (Q), le moment de la dernière transmission de la requête (Q) est mis en correspondance avec cette requête (Q) ou la clé d'identification correspondant à la requête (Q) par l'ordinateur utilisateur (30, 31, 32) et, dans le cas où le résultat (R) de la requête (Q) n'a pas changé depuis la dernière transmission de la requête (Q), un message concernant cela est transmis au lieu du résultat (R) à l'ordinateur utilisateur (30, 31, 32).

2. Procédé selon la revendication 1, **caractérisé en ce que** chacun des ensembles de données (D) comprend une clé qui identifie l'ensemble de données (D) de manière unique et **en ce que**, pour chaque requête (Q) effectuée, toutes les clés des ensembles de données (D) déterminés lors de la requête (Q) sont enregistrées en tant que résultat (R) et sont enregistrées conjointement avec la requête (Q).

3. Procédé selon l'une des revendications précédentes, **caractérisé en ce que**
- de nouveaux messages (N, L, U) sont continuellement transmis au système informatique (1), selon les modifications apportées aux conditions et **en ce que**, selon ces messages (N, L, U), des ensembles de données (D) sont supprimés ou modifiés ou de nouveaux ensembles de données (D) sont ajoutés et
- lors de l'arrivée de ces messages (N, L, U), plus particulièrement lors de l'ajout de nouveaux ensembles de données (D) et/ou lors de la suppression et/ou de la modification d'ensembles de données (D) existants, les résultats (R) enregistrés des requêtes (Q) déjà effectuées sont adaptés aux ensembles de données (D) ajoutés, modifiés ou supprimés.

4. Procédé selon la revendication 3, **caractérisé en ce que**, après l'arrivée de messages (N, U), avec lesquels de nouveaux ensembles de données (D) arrivent ou avec lesquels des ensembles de données existants sont modifiés, les requêtes (Q) déjà effectuées sont appliquées exclusivement aux ensembles de données (D) reçus ou modifiés, les nouveaux ensembles de données (D) respectant les critères de la requête (Q) correspondante sont ajoutés au résultat (R) de la requête (Q) et/ou les ensembles de données (D) modifiés ne respectant plus les critères de la requête (Q) sont éliminés du résultat (R) de la requête (Q).

5. Procédé selon la revendication 3 ou 4, **caractérisé en ce que**, après la suppression d'un ensemble de données (D) existant ou son marquage comme étant supprimé, plus particulièrement lors de l'arrivée d'un message de suppression (L), l'ensemble de données (D) ou sa clé (K) est supprimé des résultats (R) des requêtes (Q) effectuées.

6. Système informatique (20) pour la mise à disposition d'informations de trafic locales, plus particulièrement d'informations de trafic aérien ou de trafic maritime, comprenant une base de données (22), les informations de trafic étant enregistrées sous la forme d'ensembles de données (D) dans la base de données (22) du système informatique (20),
- moyennant quoi, dans la base de données (22), pour chacun des ensembles de données (D), une mémoire correspondante est prévue pour une localisation ou une zone locale et une autre mémoire est prévue pour le début de validité et, le cas échéant encore une autre mémoire est prévue pour la fin de validité ainsi que, le cas échéant, encore une autre mémoire est prévue pour des remarques supplémentaires concernant une perturbation du trafic aérien,
- le système informatique (20) étant relié avec une liaison de données par l'intermédiaire d'un réseau de requête (2) avec l'ordinateur utilisateur (30, 31, 32), plus particulièrement un ordinateur se trouvant dans un centre de contrôle ou un ordinateur se trouvant dans un avion,
- le système informatique (20) comprenant une unité de traitement de requêtes (21) qui, lors de l'arrivée d'une requête (Q) en provenance d'un ordinateur par l'intermédiaire du réseau (2) vers le système informatique (20), analyse cette requête (Q), la requête (Q) présentant une zone limitée localement et, le cas échéant, dans temporellement, ainsi que d'éventuels critères supplémentaires, en tant que critères de requête (Q), l'unité de traitement de requêtes (21) recherchant des ensembles de données (D) dans la base de données (22) et sélectionnant dans la base de données (22) les ensembles de données (D) dont la localisation ou la zone locale se trouve à l'intérieur de la zone limitée localement (B) indiquant dans la requête (Q) et qui respectent les critères supplémentaires, éventuellement prédéterminés, de la requête et transmet ces ensembles de données (D) en tant que résultat de la requête (Q) à l'ordinateur utilisateur (30, 31, 32) correspondant,
- une unité de contrôle de requête (25), connectée en aval de l'unité de traitement de requête (21), est prévue, dans laquelle chaque requête (Q) arrivant dans le système informatique (20) est introduite après son traitement conjointement avec le résultat (R) calculé et qui transmet la requête (Q) ainsi que le résultat (R) à une unité d'enregistrement de requête (24), en ce que l'unité de contrôle de requête (25) vérifie, lors de l'arrivée d'une requête supplémentaire (Q'), si sa zone limitée localement et, le cas échéant, également ses critères de requête supplémentaires, est ou sont identique(s) à la zone limitée localement, le cas échéant également aux critères de requête supplémentaires, d'une requête (Q) déjà effectuée,
- l'unité de contrôle de requête (25) transmettant, dans ce cas, le résultat (R) enregistré correspondant à la requête (Q) déjà effectuée à l'ordinateur (30, 31, 32) et, dans le cas contraire, l'unité de traitement de requête (21) transférant la requête (Q) entrante à la base de données (22) qui traite la requête (Q) et transmet le résultat ainsi déterminé à l'ordinateur utilisateur,
**caractérisé en ce que**
- l'unité de traitement de requête (21) attribue à un ordinateur utilisateur (30, 31, 32), lors de la première transmission d'une requête (Q), une clé d'identification correspondant à cette requête, à laquelle est attribuée une durée de validité et **en ce que** l'ordinateur utilisateur (30, 31, 32) effectue, pendant la durée de validité de la clé d'identification, la requête par transmission de la clé d'identification et
- l'ordinateur utilisateur (30, 31, 32) enregistre, lors de la première transmission d'une requête (Q) par un ordinateur utilisateur (30, 31, 32), le résultat (R) déterminé dans l'ordinateur utilisateur (30, 31, 32), et, lors d'une transmission ultérieure de la même requête (Q), le moment de la dernière transmission de la requête (Q) est attribué par l'ordinateur utilisateur (30, 31, 32) à cette requête (Q) ou à la clé d'identification correspondant à la requête (Q) et l'unité de traitement de requête (21) transmet à l'ordinateur utilisateur (30, 31, 32), dans le cas où le résultat (R) de la requête (Q) n'a pas changé depuis la dernière transmission de la requête (Q), un message correspondant au lieu du résultat (R).

7. Système informatique (20) selon la revendication 6, **caractérisé en ce qu'**à chaque ensemble de données (D) est attribuée une clé (K) qui identifie l'ensemble de données (D) de manière unique et **en ce que** l'unité d'enregistrement de requête (24) comprend, dans sa mémoire de résultats, des zones de mémoire pour les différentes clés de la requête (Q) correspondante.

8. Système informatique (20) selon l'une des revendications 6 ou 7, **caractérisé par** une unité de traitement de messages (23) qui est connectée par l'intermédiaire d'un réseau d'actualisation (1) à plusieurs sources de données (1a ... 1d), qui envoient, sur la base de conditions actuelles, des messages (L, N, U) à l'unité de traitement de messages (23), en fonction des nouveaux ensembles de données (D) à ajouter ou des ensembles de données (D) existants à modifier ou à supprimer dans la base de données (24) ainsi que
- une unité d'actualisation (26), connectée en aval de l'unité de traitement messages (23) qui, lors de l'arrivée de messages (L, N, U) à l'unité de traitement de messages (23), adapte les résultats (R) enregistrés des requêtes (Q) déjà effectuées aux modifications des ensembles de données (D) provoquées par les messages.

9. Système informatique (20) selon la revendication 8, **caractérisé en ce que** l'unité d'activation (26) applique, lors de l'arrivée de messages avec lesquels de nouveaux ensembles de données (D) sont ajoutés ou des ensembles de données (D) existants sont modifiés ou les requêtes (Q) enregistrées dans l'unité d'enregistrement de requêtes (24) exclusivement aux ensembles de données (D) nouveaux ou modifiés et les nouveaux ensembles de données (D) respectant les critères de la requête (Q) sont ajoutés et attribués aux résultats (R) de la requête (Q) et les ensembles de données (D) ne correspondant plus aux critères de la requête (Q) sont éliminés des résultats.

10. Système informatique (20) selon la revendication 8 ou 9, **caractérisé en ce que** l'unité d'actualisation (26) supprime, dans le cas de l'existence d'une demande de suppression (L) concernant un ensemble de données (D) existant, l'ensemble de données (D) concerné ou la clé de l'ensemble de données (D) concerné de la mémoire de résultats de l'unité d'enregistrement de requêtes (24).

11. Support de données sur lequel est enregistré un programme permettant d'exécuter un procédé selon l'une des revendications 1 à 5.
